# EUROPEAN PATENT SPECIFICATION

(11) **EP 4 234 651 B1**
(45) Date of publication and mention of the grant of the patent: **19.02.2025**
(21) Application number: 21882757.4
(22) Date of filing: 18.10.2021
(51) Int. Cl.: B29D 7/01

(54) **METHOD FOR PRODUCING SHEET**
VERFAHREN ZUR HERSTELLUNG EINER FOLIE
PROCÉDÉ DE PRODUCTION DE FEUILLE

(30) Priority: 20.10.2020 JP 2020176131
(43) Date of publication of application: 30.08.2023
(73) Proprietor: Denka Company Limited, Tokyo 103-8338 (JP)
(72) Inventor: WADA, Syuichi, Tokyo 103-8338 (JP); ONO, Takeshi, Tokyo 103-8338 (JP); KUSAMA, Hiroyuki, Tokyo 103-8338 (JP); NARA, Tomoyuki, Tokyo 103-8338 (JP)
(74) Representative: Zacco Sweden AB
(86) International application number: PCT/JP2021/038366
(87) International publication number: WO 2022/085616

(56) References cited:
- EP-A1- 2 409 651
- JP-A- 2001 341 233
- JP-A- 2001 341 233
- JP-A- 2008 184 265
- JP-A- 2008 184 265
- JP-A- 2010 021 407
- JP-A- 2010 159 096
- JP-A- 2013 028 410
- JP-A- 2016 121 341
- JP-A- 2019 214 435
- US-A1- 2018 304 600

## Description

### Technical Field

The present invention relates to a method for producing a sheet.

### Background Art

Thermally conductive materials are used to efficiently transfer heat from an electronic component to a cooling portion such as a heat sink or a housing. As such thermally conductive materials, a thermally conductive sheet obtained by mixing silicone rubber or silicone gel with thermally conductive fillers, thermally conductive grease obtained by mixing silicone oil with thermally conductive fillers, and the like are known (for example, see Patent Literature 1).

Grease has higher adhesion to an interface than a sheet, and can be formed into a thin film with a thickness down to the maximum particle size of thermally conductive fillers, and thus can achieve low thermal resistance. However, since grease is in a liquid form, it has drawbacks in that it may drip or cause pump-out. Meanwhile, a sheet has higher workability than grease, and can be fixed between an electronic component and a heat sink or a housing while being compressed, and thus is free from problems such as dripping and pump-out of grease. Methods for producing resin sheets are known from Patent Literature 2 and Patent Literature 3. Instruments for transferring biological graft or scooping up easily deformed articles are known from Patent Literature 4 and Patent Literature 5.

### Citation List

### Patent Literature

Patent Literature 1: WO 2018190233
Patent Literature 2: JP 2001 341233 A
Patent Literature 3: US 2018/304600 A1
Patent Literature 4: EP 2 409 651 A1
Patent Literature 5: JP 2008 184265 A

### Summary of Invention

### Technical Problem

The foregoing sheet is transposed to a laminate film, for example, in the course of its production. However, since the sheet is soft and is easily deformable, it is likely to deform while being transposed, which is problematic.

The present invention has been made in view of the foregoing problems, and it is an object of the present invention to provide a method for producing a sheet in which when a to-be-transferred object with predetermined properties is transferred onto a film with a rough surface, the object is unlikely to undergo a change in shape.

### Solution to Problem

That is, the present invention relates to a method for producing a sheet according to claim 1.

### Advantageous Effects of Invention

The present invention can provide a method for producing a sheet in which when a to-be-transferred object with predetermined properties is transferred onto a film with a rough surface, the object is unlikely to undergo a change in shape.

### Brief Description of Drawings

[Figure 1] Figure 1 shows a schematic view illustrating a sheet forming step.
[Figures 2] Figures 2 shows schematic views each illustrating a scoop-up step.
[Figures 3] Figures 3 shows schematic cross-sectional views each illustrating an aspect of a movable plate.
[Figure 4] Figure 4 shows a schematic cross-sectional view illustrating an aspect of a fixture.
[Figure 5] Figure 5 shows a schematic view illustrating an arrangement step.

### Description of Embodiments

Hereinafter, an embodiment of the present invention (hereinafter referred to as "the present embodiment") will be specifically described, but the present invention is not limited thereto, and can be modified in various ways without departing from the scope of the invention, which is defined by the appended claims. Throughout the drawings, identical elements are denoted by identical reference signs, and overlapped description will be omitted. In addition, positional relationships regarding top, down, left, right, and the like are based on the positional relationships illustrated in the drawings unless otherwise stated. Further, dimensional proportions in the drawings are not limited to those illustrated in the drawings.

### [Method for producing sheet]

A method for producing a sheet of the present embodiment includes a sheet forming step of forming a raw material sheet on a smooth surface of a first film using a resin composition containing a resin and fillers, stamping the raw material sheet into a given shape, and removing an unnecessary portion, thereby forming an adhesive sheet; a scoop-up step of sending forward a movable plate, which has a transfer belt surrounding, into a gap between the adhesive sheet and the first film, thereby scooping up the adhesive sheet onto the movable plate via the transfer belt; and an arrangement step of sending back the movable plate to arrange the adhesive sheet, which has been scooped up onto the movable plate, on a rough surface of a second film. Hereinafter, each step will be specifically described.

### [Sheet forming step]

The sheet forming step is a step of forming a raw material sheet on a smooth surface of a first film using a resin composition containing a resin and fillers, stamping the raw material sheet into a given shape, and removing an unnecessary portion, thereby forming an adhesive sheet.

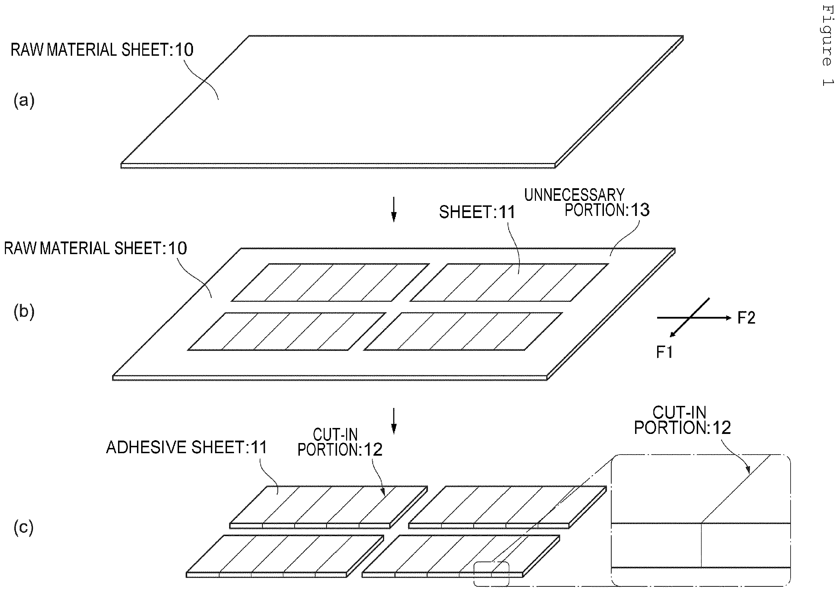

Figure 1 illustrates an aspect of the sheet forming step. First, a raw material sheet 10 is formed on a smooth surface of a first film using a resin composition containing a resin and fillers (Figure 1(a)). Then, the raw material sheet 10 is stamped into adhesive sheets 11 each having a given shape using a stamping machine, for example (Figure 1(b)). Finally, an unnecessary portion 13 is removed so that the adhesive sheets 11 can be produced (Figure 1(c)). At this time, the adhesive sheets 11 may be provided with cut-in portions 12 or may have given cutlines formed thereon.

Although Figure 1(c) exemplarily illustrates the adhesive sheets 11 each having the cut-in portions 12 in one direction, the cut-in portions 12 of the adhesive sheets 11 may be provided in either one direction F1 or a plurality of directions F1 and F2. Each adhesive sheet 11 is cut along the cut-in portions 12 to be arranged on a second film in the arrangement step described below. That is, the cut-in portions 12 are the portions to be cut in the arrangement step described below.

Although Figure 1(b) illustrates an aspect of stamping that is performed while the unnecessary portion 13 is present between the adjacent adhesive sheets 11, the unnecessary portion 13 need not be provided between the adjacent adhesive sheets 11, and the raw material sheet 10 may be stamped in a state where the adjacent adhesive sheets 11 are in contact with each other. This can reduce the amount of the unnecessary portion 13 to be discarded.

Alternatively, the scoop-up step and the arrangement step may be performed without the unnecessary portion 13 removed. If the unnecessary portion 13 is not removed, the unnecessary portion 13 serves the role of suppressing the deformation of the adhesive sheets 11. Thus, positional displacement and deformation of the adhesive sheets 11 can be suppressed during the scoop-up step and the arrangement step, or during transport, for example.

### (Adhesive sheet)

Each adhesive sheet 11 suitably used in the production method of the present embodiment is preferably flexible and viscous. Since such an adhesive sheet 11 is soft and easily deformable, and is likely to stick to various objects, the adhesive sheet 11 is difficult to be transferred, in particular. Thus, the present invention is particularly useful. In particular, using the production method of the present invention can suppress the deformation of the adhesive sheet 11 and a decrease in the dimensional accuracy of the adhesive sheet 11 while the adhesive sheet 11 is transferred.

From such perspectives, the adhesive sheet of the present embodiment can have compressibility, Asker C hardness, and adhesion, determined with a ball tack tester, that are within predetermined ranges.

### (Physical properties of sheet)

The compressibility of the adhesive sheet 11 when a load of 10 N is applied thereto in the thickness direction is 5 to 60%, more preferably, 10 tc 55%, and further preferably, 15 to 50%. The adhesive sheet 11 with compressibility in such a range is relatively soft. Thus, the adhesive sheet 11 is difficult to be transferred from one place to another without deforming or without having decreased dimensional accuracy. Therefore, the present invention is particularly useful.

The Asker C hardness of the adhesive sheet 11 is preferably less than or equal to 50, more preferably, 5 to 50, and further preferably, 5 to 40. The adhesive sheet 11 with Asker C hardness in such a range is relatively soft. Thus, the adhesive sheet 11 is difficult to be transferred from one place to another without deforming or without having decreased dimensional accuracy. Thus, the present invention is particularly useful.

The adhesion, determined with a ball tack tester, of the adhesive sheet 11 is 0 to 300 mm, more preferably, 0 to 200 mm, and further preferably, 0 to 100 mm. The adhesive sheet 11 with adhesion, determined with a ball tack tester, in such a range is likely to stick to the first film and the transfer belt, and thus is difficult to be transferred from one place to another without deforming or without having decreased dimensional accuracy. Thus, the present invention is particularly useful.

### (Composition of sheet)

Examples of the adhesive sheet 11 used in the production method of the present embodiment include, but are not particularly limited to, a heat radiating sheet containing a resin and fillers. Hereinafter, the composition of the heat radiating sheet will be exemplarily described, but the adhesive sheet 11 that can be used in the present embodiment is not limited to the following heat radiating sheet.

The heat radiating sheet may contain a silicone resin and inorganic fillers, for example, and may also contain other components as appropriate.

Using a silicone resin can obtain a thermally conductive sheet that is highly flexible and highly thermally conductive. The silicone resin is preferably the one that undergoes a curing reaction through peroxide cross-linking, condensation reaction cross-linking, addition reaction cross-linking, or ultraviolet cross-linking, for example. Among them, a silicone resin that undergoes addition reaction cross-linking is more preferable. Further, a one-component reaction type or two-component addition reaction type silicone resin is preferable.

Examples of a two-component addition reaction type silicone resin include, but are not particularly limited to, a silicone resin including a first solution containing organopolysiloxane having the vinyl group at a terminal or in a side chain, and a second solution containing organopolysiloxane having two or more H-Si groups at a terminal or in a side chain. Such two-component addition reaction type silicone resin can form silicone rubber by reacting with each other and thus curing.

The inorganic fillers can be used as heat radiating fillers. Examples of such inorganic fillers include, but are not particularly limited to, aluminum oxide, magnesium oxide, boron nitride, aluminum nitride, silicon nitride, silicon carbide, metallic aluminum, and graphite. Such inorganic fillers may be used either alone or in combination.

The content of the inorganic fillers is preferably 35 to 85 volume%, or more preferably, 40 to 85 volume% with respect to the volume (100 volume%) of the adhesive sheet 11. The higher the content of the inorganic fillers, the higher the thermal conductivity tends to be. Meanwhile, the lower the content of the inorganic fillers, the more moderate the fluidity of the adhesive sheet 11, and thus, the adhesive sheet 11 can be suitably used as a heat radiating sheet to be used by being compressed.

It should be noted that the adhesive sheet 11 may have given cutlines. The depth of the cutlines is preferably 2% to 90%, more preferably, 30% to 80%, and further preferably, 40% to 70% with respect to the thickness (100%) of the adhesive sheet 11. With such cutlines, it is possible to, when the arranged sheet is compressed in the thickness direction, allow a force acting on the sheet in the compression direction to be released in the horizontal direction of the sheet. This can reduce a load acting on the adhesive sheet 11 when it is compressed, and can also provide a structure in which air is unlikely to enter during compression. For the cutlines, WO2018/190233 may be referred to.

### [Scoop-up step]

Next, in the method for producing the adhesive sheet 11 of the present embodiment, the scoop-up step of scooping up the adhesive sheet 11 formed on a smooth surface of a first film S1 (i.e., a transfer source) is performed. In the scoop-up step, a movable plate 22, which has a transfer belt 21 surrounding, is sent forward into a gap between the first film S1 and the adhesive sheet 11, so that the adhesive sheet 11 is scooped up onto the movable plate 22 via the transfer belt 21.

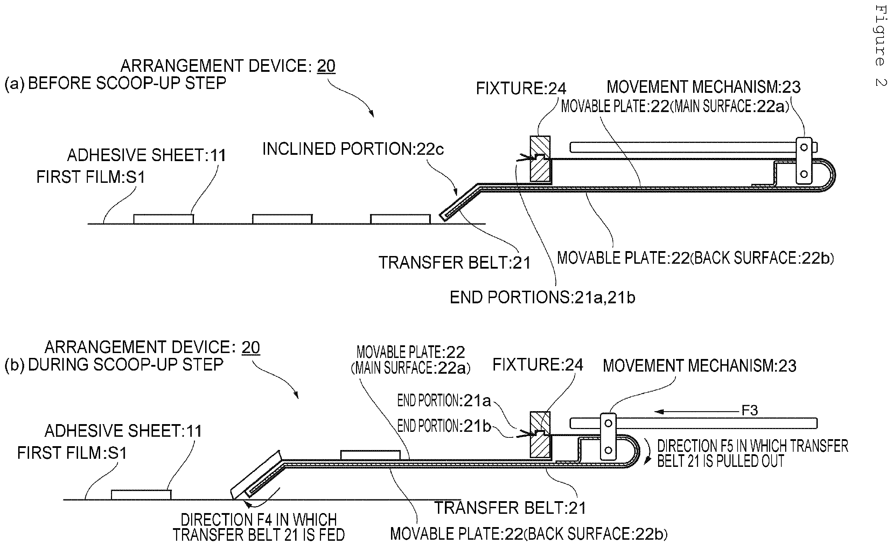

Figures 2 illustrate an arrangement device 20 used in the scoop-up step and the arrangement step. The arrangement device 20 includes the transfer belt 21, the movable plate 22 having the transfer belt 21 surrounding, and a movement mechanism 23 that slidably moves the movable plate 22 and can adjust the speed of the sliding movement.

The transfer belt 21 is stretched from the side of a main surface 22a to the side of a back surface 22b of the movable plate 22 so as to surround the movable plate 22. The transfer belt 21 is fixed at one end or both ends to a predetermined fixture 24, for example. In such a state, the movable plate 22 is slid forward (F3) relative to the fixture 24, so that the transfer belt 21 is fed from the side of the back surface 22b of the movable plate 22 to the side of the main surface 22a of the movable plate 22 (F4 in Figure 2(b)). Along with this, the transfer belt 21 is pulled out from the side of the main surface 22a of the movable plate 22 to the side of the back surface 22b of the movable plate 22 (F5 in Figure 2(b)).

In the scoop-up step, the tip end of the movable plate 22 is caused to gradually enter the gap between the first film S1 and the adhesive sheet 11 while the transfer belt 21 is fed from the side of the back surface 22b of the movable plate 22 to the side of the main surface 22a of the movable plate 22. Due to the entry, the adhesive sheet 11 is scooped up by the tip end of the transfer belt 21 so as to be placed on the transfer belt 21 as illustrated in Figure 2(b). Then, the movable plate 22 is further slid to feed the transfer belt 21 so that the adhesive sheet 11 is completely scooped up onto the transfer belt 21. During the scoop-up, friction that would deform the adhesive sheet 11 is not generated in the gap between the adhesive sheet 11 and the transfer belt 21. Thus, the adhesive sheet 11 is scooped up onto the transfer belt 21 with the original shape of the adhesive sheet 11 on the first film S1 retained without deforming or without losing its shape.

It should be noted that in the scoop-up step, it is preferable that the movement mechanism 23 slidably move the movable plate 22 at a constant speed without changing speed. This tends to suppress the deformation of the adhesive sheet 11 and a decrease in the dimensional accuracy of the adhesive sheet 11, which can occur during the scoop-up step, more.

The speed of sending the movable plate 22 forward in the scoop-up step is preferably 5 to 50 m/min, more preferably, 10 to 40 m/min, and further preferably, 15 to 30 m/min. When the speed of sending the movable plate 22 forward in the scoop-up step is in such a range, the deformation of the adhesive sheet 11 and a decrease in the dimensional accuracy of the adhesive sheet 11, which may occur when the movable plate 22 enters the gap between the adhesive sheet 11 and the first film, tend to be suppressed.

In the present embodiment, the first film and the second film are referred to as such so that the transfer source and the transfer destination of the adhesive sheet 11 can be distinguished from each other. A film as the transfer source, which has arranged thereon the adhesive sheet 11 to be scooped up, is referred to as the first film, and a film as the transfer destination, which is to have arranged thereon the adhesive sheet 11, is referred to as the second film.

The surface roughness of the smooth surface of the first film is preferably 0.01 to 50.0 µm, more preferably, 0.01 to 40.0 µm, and further preferably, 0.01 to 30.0 µm. Forming the adhesive sheet 11 on the first film with such a smooth surface can obtain the adhesive sheet 11 that has a smooth surface in contact with the first film.

The surface roughness of the rough surface of the second film is preferably 0.01 to 50.0 µm, more preferably, 1.0 to 50.0 µm, and further preferably, 10 to 50.0 µm. Transferring the adhesive sheet 11 to the second film with such a rough surface will allow the adhesive sheet 11 and the second film to easily peel off from each other in the following step. The surface roughness of the rough surface of the second film is preferably greater than the surface roughness of the smooth surface of the first film.

Examples of the rough surface of the second film include, but are not particularly limited to, a surface subjected to embossing, engraving, or matting.

The rough surface of the second film can also be expressed as the peel strength of adhesive tape. For example, when tape 31B of Nitto Denko Corporation, which has a width of 25 µm × 25 mm, is bonded to the rough surface of the second film using a crimp roller of 2 kg, and the peel strength is measured under the conditions of 300 mm/min and 180° after 20 hours have elapsed, the peel strength is preferably less than or equal to 0.01 N/25 mm. It should be noted that the smoother the surface, the greater the peel strength.

The thickness of the second film is not limited to a particular thickness, but can be set to greater than or equal to 1.0 µm, for example. In addition, the upper limit of the thickness of the second film is not limited to a particular thickness, either, but can be set to less than or equal to 3.0 mm, for example.

### (Transfer belt)

Examples of the transfer belt 21 include, but are not particularly limited to, a woven fabric and a nonwoven fabric each made of fibers, and a film that is a film-form molded object. Examples of a resin forming the woven fabric, the nonwoven fabric, or the film include, but are not particularly limited to, polyester; fluorine such as Teflon (registered trademark); polyamides such as nylon, nylon 6, nylon 66, and aromatic nylon (aramids); polyvinyl alcohol; polyvinylidene chloride; polyvinyl chloride; polyacrylonitrile; polyolefins such as polyethylene, polypropylene, and polystyrene; polyether ester; and polyurethane. It is also possible to use a belt obtained by coating a given woven fabric, nonwoven fabric, or film with a film with excellent peelability.

The transfer belt 21 preferably has a composition that is unlikely to stick to the adhesive sheet 11, which is flexible and viscous, from the perspective of performing the scoop-up step and the arrangement step without losing the shape of the adhesive sheet 11. From such a perspective, the transfer belt 21 is preferably a film containing polyester, or a woven fabric containing polyester-based fibers, and is more preferably, a film containing polyester.

The surface roughness of the transfer belt 21 is preferably greater than or equal to 0.01 µm, more preferably, 0.03 µm to 500 µm, and further preferably, 0.1 µm to 50 µm. In addition, the surface roughness of the transfer belt 21 is preferably greater than or equal to the surface roughness of the first film S1. The surface roughness of the transfer belt 21 when it is a film is small, and the surface roughness of the transfer belt 21 when it is a woven fabric, for example, is large. When the surface roughness of the transfer belt 21 is in such a range, the adhesiveness of the adhesive sheet 11 with respect to the transfer belt 21 and the first film S1 can be adjusted. Thus, the deformation of the adhesive sheet 11 and a decrease in the dimensional accuracy of the adhesive sheet 11, which would occur while the adhesive sheet 11 is transferred, tend to be suppressed.

The water contact angle of the transfer belt 21 is preferably greater than or equal to 40°, more preferably, 40 to 150°, and further preferably, 90 to 130°. In addition, the water contact angle of the transfer belt 21 is preferably greater than or equal to the water contact angle of the first film S1. When the water contact angle of the transfer belt 21 is in such a range, the adhesiveness of the adhesive sheet 11 with respect to the transfer belt 21 and the first film S1 can be adjusted. Thus, the deformation of the adhesive sheet 11 and a decrease in the dimensional accuracy of the adhesive sheet 11, which would occur while the adhesive sheet 11 is transferred, tend to be suppressed.

### (Movable plate)

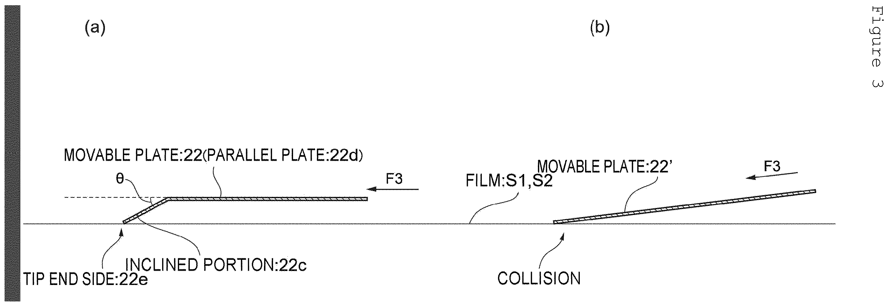

Examples of the movable plate 22 include, but are not particularly limited to, a stainless steel plate and a resin board. The movable plate 22 is preferably the one including an inclined portion 22c at its tip end to be sent forward. More specifically, the movable plate 22 preferably includes a parallel plate 22d adapted to be used in substantially parallel with the first film or the second film, and the inclined portion 22c located at its tip end (Figure 3(a)). As in the arrangement step described below, in the production method of the present embodiment, the adhesive sheet 11 is arranged while the movable plate is slidably moved. For example, in the actual use, a plurality of adhesive sheets 11 need to be placed on a long movable plate in the sliding direction F3. If the movable plate 22 does not include the inclined portion 22c, the movable plate 22 will collide with the films. Thus, there is a limitation on the slidable range of the movable plate 22 (Figure 3(b)). However, if the movable plate 22 includes the inclined portion 22c, collision between the movable plate 22 and the films S1 and S2 can be avoided. Thus, the slidable length of the movable plate 22 can be increased.

The angle θ of the inclined portion 22c with respect to the parallel plate 22d is preferably 15 to 45°, and more preferably, 20 to 40°. When the angle of the inclined portion 22c is in such a range, the deformation of the adhesive sheet 11 and a decrease in the dimensional accuracy of the adhesive sheet 11, which would occur during the scoop-up step and the arrangement step, tend to be suppressed.

The thickness of the movable plate 22 is preferably 0.5 to 3.0 mm, and more preferably, 1.0 to 2.0 mm. When the thickness of the movable plate 22 is in such a range, it will be easier for the movable plate 22 to enter a gap underneath the adhesive sheet 11. Thus, the deformation of the adhesive sheet 11 and a decrease in the dimensional accuracy of the adhesive sheet 11, which would occur during the scoop-up step and the arrangement step, tend to be suppressed.

A corner R of the tip end of a tip end side 22e, which is adapted to be sent forward, of the movable plate 22 is preferably 0.25 to 2.0 mm, and more preferably, 0.5 to 1.0 mm. When the corner R of the tip end of the tip end side 22e is in such a range, it will be easier for the movable plate 22 to enter a gap underneath the adhesive sheet 11. Thus, the deformation of the adhesive sheet 11 and a decrease in the dimensional accuracy of the adhesive sheet 11, which would occur during the scoop-up step and the arrangement step, tend to be suppressed.

### (Fixture)

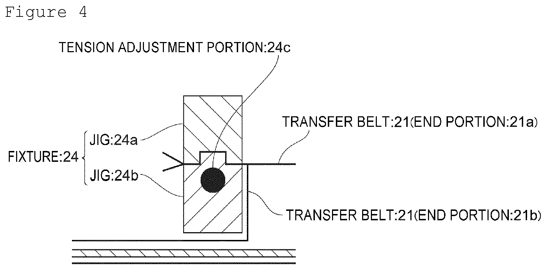

A method of fixing opposite end portions 21a and 21b of the transfer belt 21 using the fixture 24 is not limited to a particular method. Figure 4 is a schematic cross-sectional view illustrating an aspect of the fixture 24. The fixture 24 adapted to fix the opposite end portions 21a and 21b of the transfer belt 21 is not limited to a particular fixture. For example, it is possible to use two rod-like jigs 24a and 24b adapted to hold the opposite end portions 21a and 21b of the transfer belt 21 therebetween. The two rod-like jigs 24a and 24b can be securely coupled together using a fastener such as a bolt and nut or a screw (not illustrated). Accordingly, the opposite end portions 21a and 21b can be held. The jigs 24a and 24b may respectively have formed therein a recess portion and a projecting portion that can be fitted together while meshing with the transfer belt 21. Accordingly, the transfer belt 21 can be fixed more securely.

Further, the fixture 24 may be provided with a tension adjustment portion 24c adapted to adjust the tension of the transfer belt 21. Examples of the tension adjustment portion 24c include a portion adapted to allow the jigs 24a and 24b to be held while being fixed at a given angle of rotation, and an elastic body adapted to pull the end portions 21a and 21b by adding a constant weight thereto. When the movable plate 22 is slidably moved repeatedly in the scoop-up step and the arrangement step, the transfer belt 21 may gradually undergo ductile deformation and thus may warp. When the transfer belt 21 has warped to more than a given level, the adhesive sheet 11 will be more likely to deform or have decreased dimensional accuracy in the scoop-up step and the arrangement step. However, providing the tension adjustment portion 24c allows the scoop-up step and the arrangement step to be performed in succession without the need for adjustments such as the replacement of the transfer belt.

### [Arrangement step]

Finally, the arrangement step is performed in which the movable plate 22 is sent back so that the adhesive sheet 11, which has been scooped up onto the movable plate 22, is arranged on the second film S2.

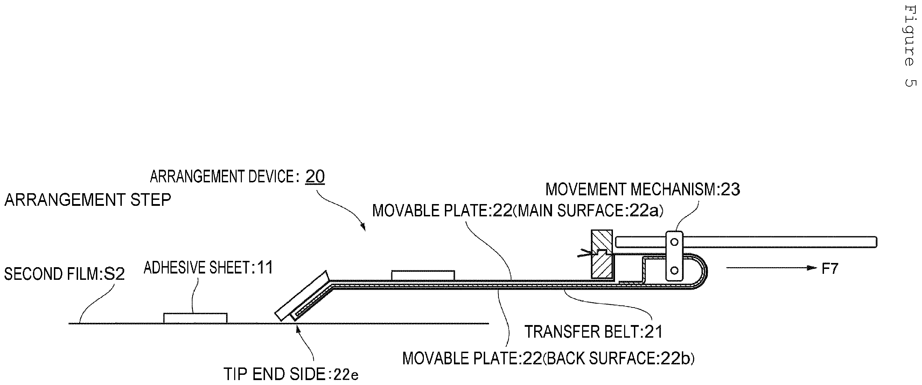

Figure 5 is a schematic view illustrating the arrangement step. In the arrangement step, the movable plate 22 is sent back in a direction F7 while the transfer belt 21 is fed back from the side of the main surface 22a of the movable plate 22 to the side of the back surface 22b of the movable plate 22. For example, when the movable plate 22 is sent back backward (F7) relative to the fixture 24 in a state where the transfer belt 21 is fixed at one end or both ends to the predetermined fixture 24, the transfer belt 21 is pulled back from the side of the main surface 22a of the movable plate 22 to the side of the back surface 22b of the movable plate 22 (F7 in Figure 4). Accordingly, the adhesive sheet 11 is sent forward onto the second film S2 from the tip end of the transfer belt 21. In such a case, no friction is generated between the adhesive sheet 11 and the second film S2. Thus, the adhesive sheet 11 can be arranged on the second film S2 without deforming or without having decreased dimensional accuracy.

The send-back speed of the movable plate 22 in the arrangement step is preferably 1.0 to 7.5 m/min, more preferably, 1.0 to 6.5 m/min, and further preferably, 1.0 to 6.0 m/min. When the send-back speed of the movable plate 22 while the adhesive sheet 11 is in contact with the second film S2 is in such a range, the deformation of the adhesive sheet 11 and a decrease in the dimensional accuracy of the adhesive sheet 11, which would occur when the adhesive sheet 11 contacts the second film S2, tend to be suppressed.

### Examples

Hereinafter, the present invention will be described more specifically by way of examples and comparative examples. Examples 1, 2 and 5 are reference examples not according to the invention.

### [Example 1]

A composition was obtained by mixing a two-component addition reaction type silicone resin and inorganic fillers. The obtained composition was molded into a sheet form using the doctor blade method, and was then thermally cured so that a raw material sheet was obtained on a first film. The thus obtained raw material sheet was cut as illustrated in Figure 1(c) so that sheets with cut-in portions were obtained. It should be noted that each sheet has a rectangular shape with a size of 100 mm (shorter side) × 216 mm (longer side), and has cut-in portions at intervals of 18 mm in the direction parallel with the shorter side. That is, the cut-in portions were formed so that 12 strip-like sheets each having a size of 100 mm × 18 mm would be formed after the arrangement step. The physical properties of each adhesive sheet are illustrated in Table 1, and the measurement method therefor is described below.

### (Compressibility)

Regarding the compressibility of each adhesive sheet, after a spacer was stamped into sheets each having a size of 10 × 10 mm, the amount of compressive deformation of each sheet when a load of 10 N was applied thereto in the thickness direction was measured using a table-top testing machine (EZ-LX manufactured by SHIMADZU CORPORATION), and then, the compressibility was calculated with the following expression. Compressibility (%) = {the amount of compressive deformation (mm) × 100} / original thickness (mm)

### (Asker C hardness)

The Asker C hardness of each adhesive sheet was measured using a spring-type hardness tester of type Asker C compliant with SRIS0101 at 25°C ("Asker rubber hardness tester, type C" manufactured by KOBUNSHI KEIKI CO., LTD.).

### (Ball tack)

The ball tack of each adhesive sheet was measured in compliance with JIS Z 0237.

### (Scoop-up step)

The scoop-up step was performed as illustrated in Figures 2, using a PET film (with a surface roughness of 1 µm and a contact angle of 120°) as the transfer belt. It should be noted that the thickness of the movable plate was set to 3.0 mm, the angle of the inclined portion was set to 30°, and the send-forward speed was set to 20 m/min.

### (Arrangement step)

The arrangement step was performed as illustrated in Figure 5, and the adhesive sheets were separated along the cut-in portions so that 12 strips were arranged on the second film. It should be noted that the pull-back speed and the send-back speed were set to 5 m/min.

### [Examples 2 to 8]

Each evaluation was performed as in Example 1 except that the conditions were changed to those illustrated in Table 1.

### (Evaluation of dimensions)

The width dimensions of the 12 strips obtained through the foregoing series of steps were measured, and the mean value Ave thereof was calculated. Then, the dimensions of each sheet arranged on the second film were evaluated based on the following criteria regarding the difference between the target width (18 mm) of the strip dimensions (length 100 mm × width 18 mm) and the mean value Ave.
A: The difference between the target width (18 mm) and the mean value Ave is less than or equal to 0.10 mm.
B: The difference between the target width (18 mm) and the mean value Ave is greater than 0.10 mm and less than or equal to 0.30 mm.
C: The difference between the target width(18 mm) and the mean value Ave is greater than 0.30 mm.

### (Evaluation of appearance)

The appearance of the 12 strips obtained through the foregoing series of steps was confirmed, and was evaluated based on the following evaluation criteria.
∘: None of the strips had warp, curl, air bubbles, waviness, or partially uncut portions.
×: At least one of the strips had any one of warp, curl, air bubbles, waviness, and partially uncut portions.

**[Table 1]**

| | Compressibility (%) | Asker C | Ball Tack (mm) | Evaluation of Dimensions | Evaluation of Appearance |
|---|---|---|---|---|---|
| Example 1 | 3 | 60 | 3 | A | ○ |
| Example 2 | 70 | 7 | 3 | B | ○ |
| Example 3 | 40 | 8 | 3 | A | ○ |
| Example 4 | 30 | 10 | 3 | A | ○ |
| Example 5 | 15 | 30 | 400 | A | ○ |
| Example 6 | 15 | 30 | 200 | A | ○ |
| Example 7 | 15 | 30 | 0 | B | ○ |
| Example 8 | 15 | 30 | 3 | A | ○ |

### Industrial Applicability

The production method of the present invention is industrially applicable as a method that can be used for a production process that requires a soft to-be-transferred object to be arranged on a given portion.

### Reference Signs List

- 10: Raw material sheet
- 11: Adhesive sheet
- 12: Cut-in portion
- 13: Unnecessary portion
- 20: Arrangement device
- 21: Transfer belt
- 21a, 21b: End portions
- 22: Movable plate
- 22a: Main surface
- 22b: Back surface
- 22c: Inclined portion
- 22d: Parallel plate
- 22e: Tip end side
- 23: Movement mechanism
- 24: Fixture
- 24a, 24b: Jigs
- 24c: Tension adjustment portion
- S1: First film
- S2: Second film

## Claims

1. A method for producing a sheet, comprising:
a sheet forming step of forming a raw material sheet (10) on a smooth surface of a first film (S1) by using a resin composition containing a resin and fillers, stamping the raw material sheet (10) into a given shape, and removing an unnecessary portion (13), thereby forming an adhesive sheet (11), wherein a compressibility of the sheet when a load of 10 N is applied to the sheet in a thickness direction is 5 to 60%, and wherein an adhesion of the sheet, determined with a ball tack tester and measured in compliance with JIS Z 0237, is 0 to 300 mm;
a scoop-up step of sending forward a movable plate (22) that has a transfer belt (21) surrounding the movable plate (22) into a gap between the adhesive sheet (11) and the first film (S1), thereby scooping up the adhesive sheet (11) onto the movable plate (22) via the transfer belt (21); and
an arrangement step of sending back the movable plate (22) to arrange on a rough surface of a second film (S2) the adhesive sheet (11) that has been scooped up onto the movable plate (22),
wherein:
the scoop-up step comprises sending forward the movable plate (22) while feeding the transfer belt (21) to a side of a main surface (22a) of the movable plate (22) from a side of a back surface (22b) of the movable plate (22), and
the arrangement step comprises sending back the movable plate (22) while feeding back the transfer belt (21) to the side of the back surface (22b) of the movable plate (22) from the side of the main surface (22a) of the movable plate (22),
wherein compressibility of the sheet is determined by measuring the amount of compressive deformation of each sheet in the thickness direction and thereafter calculating the compressibility by dividing the amount of compressive deformation by the original thickness.

2. The method for producing the sheet according to claim 1, wherein the smooth surface of the first film (S1) has a surface roughness of 0.01 to 50.0 µm.

3. The method for producing the sheet according to claim 1 or 2, wherein the rough surface of the second film (S2) has a surface roughness of 0.01 to 50.0 µm.

4. The method for producing the sheet according to any one of claims 1 to 3, wherein:
the rough surface of the second film (S2) has been subjected to embossing, engraving, or matting, and
a thickness of the second film (S2) is greater than or equal to 1.0 µm.

5. The method for producing the sheet according to any one of claims 1 to 4, wherein an Asker C hardness of the sheet is less than or equal to 50, when measured using a spring-type hardness tester of type Asker C compliant with SRIS0101 at 25°C.

6. The method for producing the sheet according to any one of claims 1 to 5, wherein the transfer belt (21) is a film containing polyester, or a woven fabric containing polyester-based fibers.

## Patentansprüche

1. Verfahren zum Herstellen einer Folie, umfassend:
einen Folienbildungsschritt, bei dem unter Verwendung einer Harzzusammensetzung, die ein Harz und Füllstoffe enthält, eine Rohmaterialfolie (10) auf einer glatten Oberfläche eines ersten Films (S1) gebildet wird, wobei die Rohmaterialfolie (10) in eine vorgegebene Form gestanzt wird und ein nicht benötigter Teil (13) entfernt wird, wodurch eine Haftfolie (11) gebildet wird, wobei eine Komprimierbarkeit der Folie, wenn eine Last von 10 N in einer Dickenrichtung auf die Folie angewendet wird, 5 bis 60 % beträgt und wobei eine Haftung der Folie, bestimmt durch einen Kugeltester und gemessen in Übereinstimmung mit JIS Z 0237, bei 0 bis 300 mm liegt;
einen Aufnahmeschritt, bei dem eine bewegbare Platte (22), die ein Übertragungsband (21) aufweist, das die bewegbare Platte (22) umgibt, in einen Spalt zwischen der Haftfolie (11) und dem ersten Film (S1) vorwärtsgeschoben wird, wodurch die Haftfolie (11) über das Übertragungsband (21) auf die bewegbare Platte (22) aufgenommen wird; und
einen Anordnungsschritt, bei dem die bewegbare Platte (22) zurückgeschoben wird, um die Haftfolie (11), die auf die bewegbare Platte (22) aufgenommen wurde, auf einer rauen Oberfläche eines zweiten Films (S2) anzuordnen,
wobei:
der Aufnahmeschritt ein Vorwärtsschieben der bewegbaren Platte (22) umfasst, während das Übertragungsband (21) von einer Seite einer Rückoberfläche (22b) der bewegbaren Platte (22) zu einer Seite einer Hauptoberfläche (22a) der bewegbaren Platte (22) geführt wird, und
der Anordnungsschritt ein Zurückschieben der bewegbaren Platte (22) umfasst, während das Übertragungsband (21) von der Seite der Hauptoberfläche (22a) der bewegbaren Platte (22) zu der Seite der Rückoberfläche (22b) der bewegbaren Platte (22) zurückgeführt wird,
wobei die Komprimierbarkeit der Folie bestimmt wird durch Messen der Menge an komprimierter Deformierung jeder Folie in der Dickenrichtung und darauffolgendes Berechnen der Komprimierbarkeit durch Teilen der Menge an komprimierter Deformierung durch die ursprüngliche Dicke.

2. Verfahren zum Herstellen der Folie nach Anspruch 1, wobei die glatte Oberfläche des ersten Films (S1) eine Oberflächenrauheit von 0,01 bis 50,0 µm aufweist.

3. Verfahren zum Herstellen der Folie nach Anspruch 1 oder 2, wobei die raue Oberfläche des zweiten Films (S2) eine Oberflächenrauheit von 0,01 bis 50,0 µm aufweist.

4. Verfahren zum Herstellen der Folie nach einem der Ansprüche 1 bis 3,
wobei:
die raue Oberfläche des zweiten Films (S2) Prägen, Gravieren oder Mattieren unterzogen wurde und
eine Dicke des zweiten Films (S2) größer als oder gleich 1,0 µm ist.

5. Verfahren zum Herstellen der Folie nach einem der Ansprüche 1 bis 4, wobei eine Asker-C-Härte der Folie kleiner als oder gleich 50 ist, gemessen unter Verwendung eines Federhärtetesters vom Typ Asker-C in Übereinstimmung mit SRIS0101 bei 25 °C.

6. Verfahren zum Herstellen der Folie nach einem der Ansprüche 1 bis 5, wobei es sich bei dem Übertragungsband (21) um einen Film, der Polyester enthält, oder ein Gewebe, das Fasern auf Polyesterbasis enthält, handelt.

## Revendications

1. Procédé de production d'une feuille, comprenant :
une étape de formation de feuille consistant à former une feuille de matière première (10) sur une surface lisse d'un premier film (S1) en utilisant une composition de résine contenant une résine et des charges, à estamper la feuille de matière première (10) dans une forme donnée, et à retirer une partie inutile (13), formant ainsi une feuille adhésive (11), dans lequel une compressibilité de la feuille lorsqu'une charge de 10 N est appliquée à la feuille dans une direction d'épaisseur est de 5 à 60 %, et dans lequel une adhérence de la feuille, déterminée avec un testeur d'adhérence à bille et mesurée conformément à la norme JIS Z 0237, est de 0 à 300 mm ;
une étape de ramassage consistant à envoyer vers l'avant une plaque mobile (22) qui a une courroie de transfert (21) entourant la plaque mobile (22) dans un espace entre la feuille adhésive (11) et le premier film (S1), ramassant ainsi la feuille adhésive (11) sur la plaque mobile (22) via la courroie de transfert (21) ; et
une étape d'agencement consistant à renvoyer la plaque mobile (22) pour agencer sur une surface rugueuse d'un second film (S2) la feuille adhésive (11) qui a été ramassée sur la plaque mobile (22),
dans lequel :
l'étape de ramassage comprend l'envoi vers l'avant de la plaque mobile (22) tout en alimentant la courroie de transfert (21) vers un côté d'une surface principale (22a) de la plaque mobile (22) à partir d'un côté d'une surface arrière (22b) de la plaque mobile (22), et
l'étape d'agencement comprend le renvoi de la plaque mobile (22) tout en alimentant la courroie de transfert (21) vers le côté de la surface arrière (22b) de la plaque mobile (22) à partir du côté de la surface principale (22a) de la plaque mobile (22),
dans lequel la compressibilité de la feuille est déterminée en mesurant la quantité de déformation par compression de chaque feuille dans le sens de l'épaisseur et en calculant ensuite la compressibilité en divisant la quantité de déformation par compression par l'épaisseur d'origine.

2. Procédé de fabrication de la feuille selon la revendication 1, dans lequel la surface lisse du premier film (Sl) présente une rugosité de surface de 0,01 à 50,0 µm.

3. Procédé de fabrication de la feuille selon la revendication 1 ou 2, dans lequel la surface rugueuse du second film (S2) présente une rugosité de surface de 0,01 à 50,0 µm.

4. Procédé de fabrication de la feuille selon l'une quelconque des revendications 1 à 3,
dans lequel :
la surface rugueuse du second film (S2) a été soumise à un estampage, une gravure ou un matage, et
une épaisseur du second film (S2) est supérieure ou égale à 1,0 µm.

5. Procédé de fabrication de la feuille selon l'une quelconque des revendications 1 à 4, dans lequel la dureté Asker C de la feuille est inférieure ou égale à 50, lorsqu'elle est mesurée à l'aide d'un testeur de dureté à ressort de type Asker C conforme à la norme SRIS0101 à 25°C.

6. Procédé de fabrication de la feuille selon l'une quelconque des revendications 1 à 5, dans lequel la courroie de transfert (21) est un film contenant du polyester, ou un tissu tissé contenant des fibres à base de polyester.
